# EUROPEAN PATENT APPLICATION

(11) **EP 0 660 315 A1**
(43) Date of publication of application: **28.06.1995**
(21) Application number: 94309489.6
(22) Date of filing: 19.12.1994
(51) Int. Cl.: G11B 7/26, C25D 1/10

(54) **Process and apparatus for production of a stamper**

(30) Priority: 24.12.1993 JP 345925/93
(71) Applicant: CANON KABUSHIKI KAISHA, Tokyo (JP)
(72) Inventor: Kamitatakahara, Hirofumi, Ohta-ku, Tokyo (JP); Santo, Tsuyoshi, Ohta-ku, Tokyo (JP); Kanome, Osamu, Ohta-ku, Tokyo (JP)
(74) Representative: Beresford, Keith Denis Lewis

(57) **Abstract**

A process for producing a stamper having a stamping surface, the stamper having a uniform thickness is described. The process comprises the steps of providing a master having a pattern corresponding to the stamping pattern; electroforming on the patterned surface of the master to form an electroformed layer; abrading a first surface of the electroformed layer which does not contact with the patterned surface of the master using the patterned surface of the master as a reference surface; and peeling the electroformed layer from the master to obtain the stamper.

Apparatus for performing the process is described. The apparatus includes a base plate having a reference surface, and a holder having a holding surface for holding the master. The holding surface (410) is inclinable with respect to the reference surface (406). Means (407) are provided for indicating the inclination of the holding surface to the reference surface.

## Description

This invention relates to a process for producing a stamper having a small profiled pattern on its surface and an apparatus for use in the production of the stamper.

Substrates for optical recording media, such as optical disks, optical cards etc. have small raised and/or depressed information structures on their surface (hereinafter these structures are referred to as "preformats"). To produce such substrates, stampers which have a pattern corresponding to the preformat are usually used. A substrate having a preformat can then be produced by, for example, injecting molten resin into a cavity attached to the stamper.

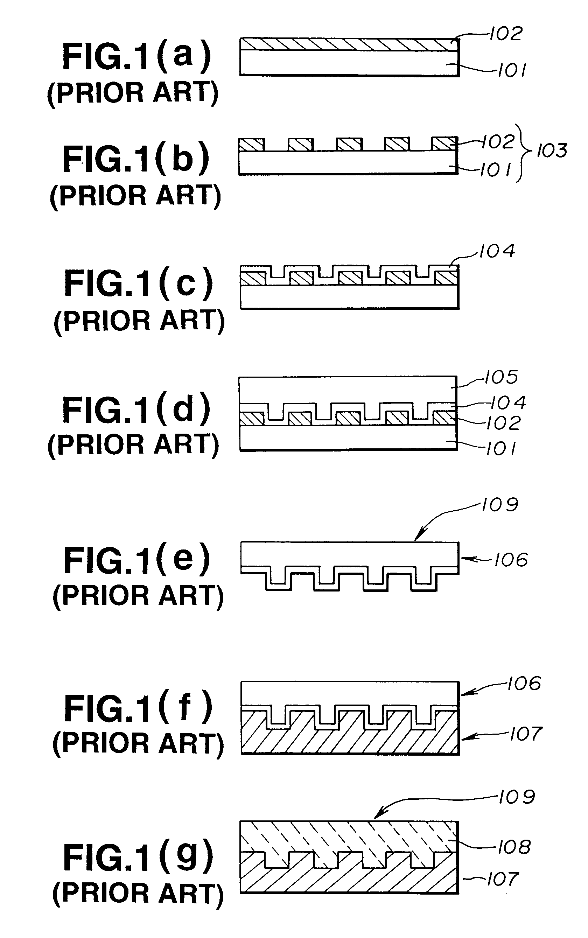

Figures 1, 2 and 3 illustrate prior art processes used in the production of a preformat on a substrate.

Figure 1(a) shows a photoresist layer 102 formed on a substrate 101. As seen in Figure 1(b), the photoresist layer 102 is patterned with a pattern corresponding to the preformat such that the substrate and photoresist layer together form the original plate 103. As shown in Figure 1(c), an electroconductive layer 104 is then formed on the photoresist layer. As shown in Figure 1(d), an electroformed layer 105 is then formed on the electroconductive layer. As shown in Figure 1(e), the electroformed layer and the electroconductive layer are then separated from the original plate to form a stamper 106.

If the need arises, the stamper may be used as a male master stamper to form further stampers having the required pattern. Thus as shown in Figure 1(f) a female master stamper 107 is formed by electroforming on the patterned surface of the stamper 106. In Figure 1(g), an electroformed layer is formed on the patterned surface of the female master stamper to form a stamper 108. Hereinafter, the original plate includes not only the original plate 101 but the female master stamper 107.

The back surface 109 of the stamper, on the opposite side to the patterned surface of the stamper, is usually abraded such that any curvature of the stamp will not be transformed to any substrate which will be used in an optical recording medium. This abrasion is performed before peeling the stamper from the original plate (for example, as shown in Figure 1(d)), or after the separation (for example, as shown in of Figure 1(e)). However, the back surface may be abraded before the peeling because it is not necessary to protect the patterned surface of the stamper during the abrasion process.

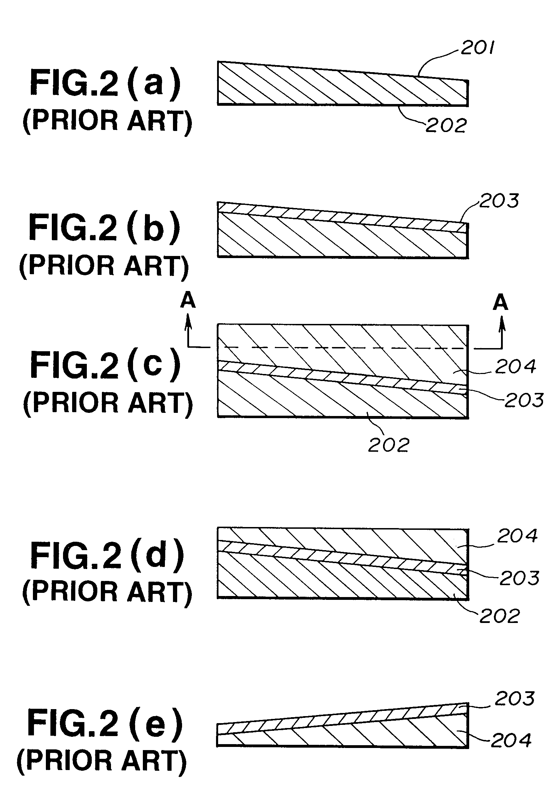

However, hitherto, using such an abrasion process, it is difficult to make a stamper having a uniform thickness. An example of a process for forming a substrate with a stamper whose thickness is not uniform, to produce a substrate which thickness is not uniform is shown in Figure 2.

As can be seen in Figure 2(a), in this example the master has a patterned surface 201 which is not parallel with the back surface 202 of the master. As shown in Figures 2(b) and 2(c), an electroformed layer 204 is formed on the patterned surface 201 over an electroconductive layer 203. The electroformed layer is then abraded down to the line A-A which is parallel with the back surface of the master as shown in Figures 2(c) and 2(d). After peeling off the master 202, an inclined stamper is then obtained as shown in Figure 2(e). Such a stamper is not suitable for stamping a substrate for an optical recording medium.

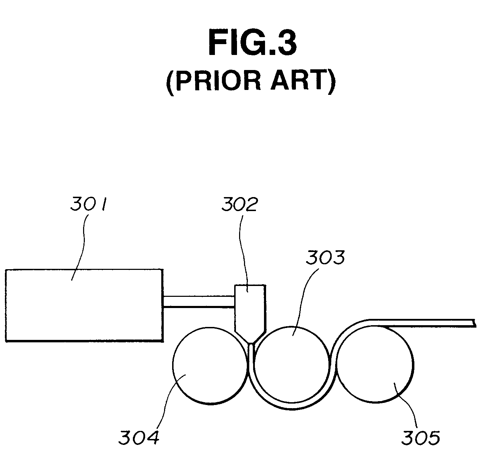

Referring now also to Figure 3, this figure illustrates a recently investigated extrusion process used to produce preformats on substrates on a continuous basis.

The process includes melting resin in a extruder 301, extruding the molten resin from a T-die 302, pressing the molten resin with a roller stamper 303 and roll 304 to transfer a pattern corresponding to the preformat on the surface of the roll stamper thereby to form substrates continuously. In this process, the roll stamper 303 is a flexible stamper and is fixed around a roll substrate.

However, in order to produce a high quality substrate for an optical recording medium using this process, a flexible stamper having high thickness uniformity is required. Where a substrate is produced using a flexible stamper whose thickness is not uniform enough, the pressure applied to the molten resin by the roll stamper 303 and the roll 304 becomes uneven due to the variation of the gap between the roll stamper 303 and the roll 304. Thus there is a problem in that the pattern is not transferred sufficiently to the molten resin, and/or a substrate having a high birefringence is produced.

As described above, it is difficult to make a stamper having highly uniform thickness, this producing a production bottle neck, increasing production costs for good quality substrates.

In view of the above problems, an object of the present invention is to provide a process which can produce a high quality stamper at low cost.

Another object of the present invention is to provide an apparatus for providing a high quality stamper at low cost.

According to a first aspect of the present invention, there is provided a process for producing a stamper having a predetermined pattern on its surface, the process comprising the steps of:
providing a master having pattern corresponding to the predetermined pattern;
electroforming on the patterned surface of the master to form an electroformed layer;
abrading the surface of the electroformed layer which does not contact the patterned surface of the master using the patterned surface of the master as a reference surface; and
peeling the electroformed layer from the master to obtain the stamper.

According to another aspect of the present invention, there is provided an apparatus for producing a stamper having a stamping pattern on a surface of the stamper, comprising:
a reference surface;
a holder having a holding surface for holding a master including the stamping pattern;
means for inclining the holder relative to the reference surface; and
means for indicating the inclination of the holder with respect to the reference surface.

According to a further aspect of the present invention, there is provided a process for producing a stamper having a stamping pattern on at least one surface, comprising the steps of:
setting a master including the stamping pattern on a holding surface;
paralleling the master's patterned surface with a reference surface and recording the inclination of the holding surface to the reference surface;
electroforming on the master's patterned surface to form a electroformed layer;
setting the master having the electroformed layer on the holding surface;
paralleling the patterned surface of the master with the reference surface according to the recorded inclination;
abrading the surface of the electroformed layer remote from the surface of the electroformed layer which is in contact with the master so as to be parallel with the patterned surface of the master; and
peeling the electroformed layer from the master to obtain the stamper.

The inventors have found that the use of a reference surface whilst abrading the back surface of the electroformed layer is responsible for the precision of the stamper.

A number of embodiments of the invention will now be described, by way of example only, with reference to the accompanying figures in which:
Figures 1(a) - Figure 1(g) are schematic sectional views for illustrating a conventional process for producing a stamper for optical recording media as has already been described;
Figures 2(a) - Figure 2(e) are schematic sectional views illustrating a process for producing a stamper for optical recording media according to the prior art as has already been described;
Figure 3 is a schematic sectional view of a conventional apparatus for producing substrates for optical recording media as has already been described;
Figure 4(a) is a schematic plan view of an apparatus in accordance with a first embodiment of the present invention;
Figure 4(b) is a schematic cross section taken on line B-B of Figure 4(a);
Figure 5 is a schematic sectional view of an apparatus for measuring inclination of the holder to the reference surface, measuring uniformity of the stampers thickness etc;
Figure 6(a) is a schematic plan view of a second embodiment of an apparatus for defining a reference surface for abrading a stamper according to the present invention;
Figure 6(b) is a schematic cross section taken on line C-C of Figure 6(a);
Figure 7 is a schematic sectional view of a third embodiment of an apparatus for defining a reference surface for abrading a stamper according to the present invention;
Figure 8 is a schematic sectional view of an apparatus for abrading a stamper according to an embodiment of the present invention;
Figure 9 is a schematic sectional view of a fourth embodiment of an apparatus for defining a reference surface for abrading a stamper;
Figure 10 is a flow chart illustrates a process of using the apparatus shown in Figure 9;
Figure 11(a) is a schematic view of a master having a concavity on the patterned surface;
Figure 11(b) is a schematic view of a spacer for compensating for the concavity of the master in Figure 11(a);
Figure 12(a) is a schematic view of a master having a convexity on the patterned surface;
Figure 12(b) is a schematic view of a spacer for compensating for the convexity of the master in Figure 12(a);
Figure 13 is a schematic illustration of a conventional electroforming apparatus;
Figures 14(a) - Figure 14(c) illustrate schematically the stages of a process for producing a master using photocurable resin; and
Figure 15 is a schematic illustration of the use of a further spacer for compensating for a concave master.

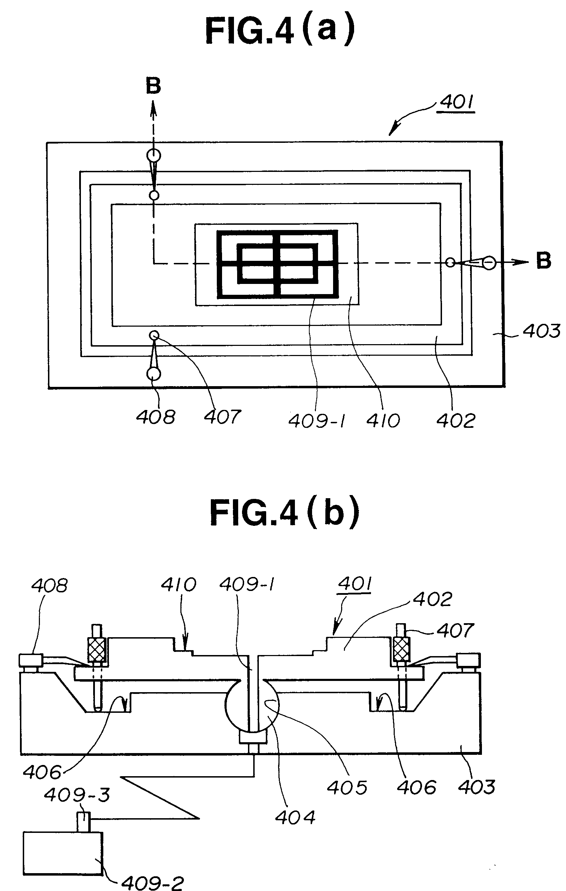

Referring to Figures 4(a) and 4(b), 401 is an apparatus for defining a reference surface for abrading a back surface of an electroformed layer which is electroformed on a patterned surface of a master as shown in Figure 2. In the apparatus 401, 402 is a holder for holding the master, the holder 402 having a holding surface 410 on which the master (not shown in Figure 4) is placed and 403 is a base plate on which is defined a reference surface 406.

The holder 402 is carried by the base plate 403 and can be inclined at a desired direction and a desired angle with respect to the reference surface 406 by means of a spherical bearing provided within the base plate 403. The required inclination of the holder 402 can be maintained by means of a clamp (not shown in Figure 4).

407 is an inclining means for inclining the holder 402 such that the holding surface 410 inclines to a desired inclination with respect to the reference surface 406. 408 denotes three indicating means for detecting the inclination of the holding surface 410 with respect to the reference surface 406. Each indicating means 408 is positioned such that the inclination of the holding surface can be calculated from the readings of the three indicating means.

409 is a vacuum chuck for holding the master on the holding surface 410. The vacuum chuck includes a groove 409-1 through the holder 402 to the holding surface 410, a suction pump 409-2, and a pipe 409-3 for connecting the groove 409-1 and the pump 409-2.

A process for producing a stamper with the apparatus shown in Figure 4 will now be explained.

First of all, a master (not shown in Figure 4) having a small surface profile pattern is set at the holding surface 410 so as to expose the patterned surface of the master. The patterned surface is set parallel to the reference surface 406 using the inclining means 407. The step of setting the patterned surface parallel to the reference surface 406, which may be set as a level surface, may be performed using a level meter (not shown).

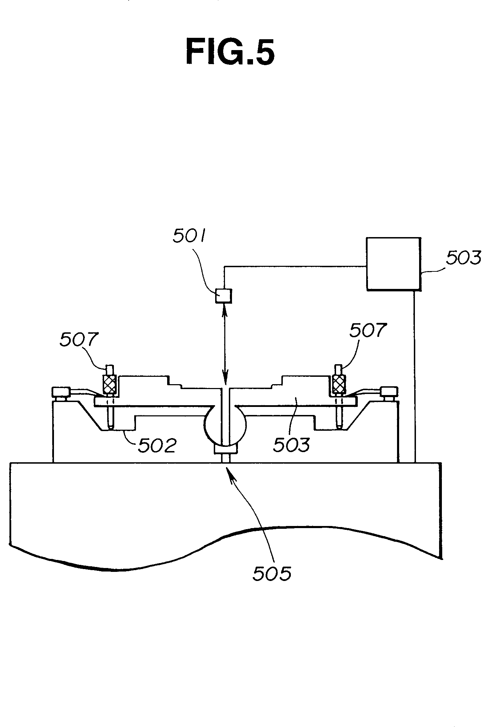

An alternative process for setting the patterned surface parallel to the reference surface is shown in Figure 5. In Figure 5, 501 is a laser head which is movable in a direction parallel to the reference surface 502. The laser head 501 is arranged to irradiate the holding surface with a laser beam, and to detect the reflected laser beam so as to detect the distances between the head 501 and various points on the patterned surface of a master (not shown) which is held on the holding surface 504 by means of a vacuum chuck 505. Thus, the patterned surface can be paralleled by moving the inclining means 507 so as to equalise the distance between the head 501 and all the measured points on the patterned surface of the master.

Where in the process shown in Figure 5 the patterned surface of the master is not sufficiently reflective to the laser beam, an electroconductive layer as described below may be formed on the patterned surface. In this case, the surface of the electroconductive layer is paralleled with the reference surface 502. However, the electroconductive layer is generally quite thin, typically 1000-2000Å. Thus, if the surface of the electroconductive layer is regarded as the surface of the patterned surface of the master, this will not influence the quality of the stamper.

The inclination of the holding surface to the reference surface such that the patterned surface of the master is parallel with the reference surface as indicated by the indicating means 408 is then recorded.

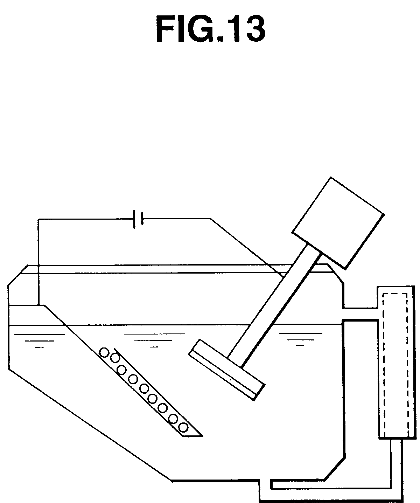

The master is then detached from the holder, and an electroconductive layer, for example a Ni layer, is formed on the patterned surface of the master using evaporation or sputtering. An electroformed layer is then formed on the electroconductive layer using a conventional electroforming apparatus as will be known to those skilled in the art of stampers, an example of which is shown in Figure 13.

The master having the electroformed layer is then replaced at the holding surface 401. If the master is bent due to internal stresses in the electroformed layer, the master may be held by suction using the vacuum chuck 409, this correcting the bend.

Next, the patterned surface of the master is paralleled with the reference surface 406 using the recorded information previously produced by the indicating means 408. However, if the inclination of the holder has been fixed parallel to the reference surface 406 this step may be omitted.

When the back surface of the electroformed layer which is formed on the patterned surface of the master is abraded as shown in Figure 2 (c), the back surface can be abraded so as to be parallel with the reference surface 406. Thus where the back surface is not parallel with the reference surface 406, the electroformed layer may be abraded so as to correct the inclination to the reference surface and thereby obtain a stamper having uniform thickness. Thereby a good quality stamper can be obtained.

In order to detect the inclination of the back surface of the master to the reference surface 406, a level meter may be used. Alternatively a laser head system as described in Figure 5 may be used. Preferably, the means for inclining the holder can incline the holding surface with a precision in the order of microns, for example, by use of a micrometer or wedge etc.

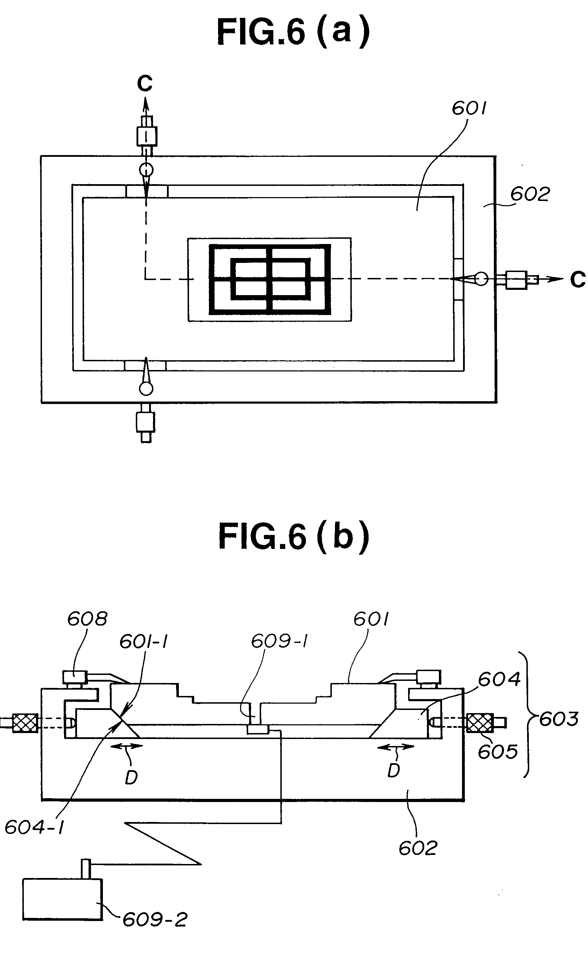

Referring now to Figure 6, this figure illustrates the use of a wedge as a means for inclining the holder. 601 is a holder for holding the master, 602 is a base plate having a reference surface and 603 is a means for inclining the holder to the reference surface comprising a wedge 604 and a means 605 for moving the wedge in the direction of the arrows "D".

The holder 601 has a tapered portion 601-1 capable of abutting against the tapered surface 604-1 of the wedge 604. In this apparatus, when the wedge moving means 605 is moved in the direction of the arrows "D", the holding surface of the holder 601 can be inclined to a desired direction and thus to a desired angle with respect to the reference surface. A high quality stamper can thereby be produced in the same manner as in the apparatus shown in Figure 4.

In an apparatus in accordance with the present invention, a means which indicates the amount by which the means for inclining the holder must move can be used. Such an indicating means is preferably initialized before the paralleling process. That is, first of all, the holding surface is paralleled with the reference surface in the same manner as the process described above so as to initialize the indicating means. Thereafter the patterned surface is preferably paralleled with the reference surface.

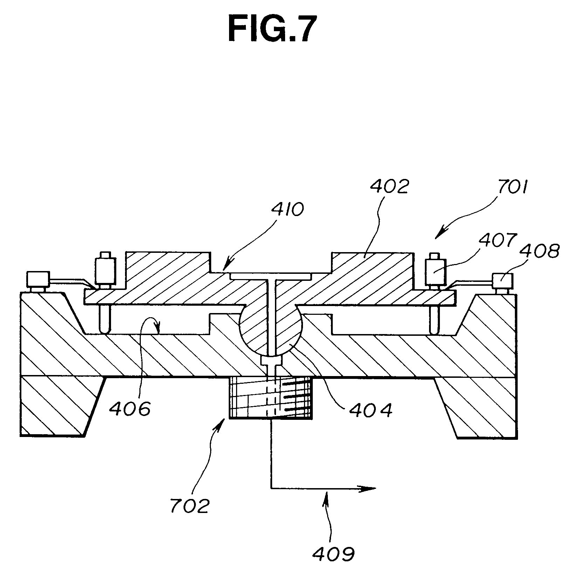

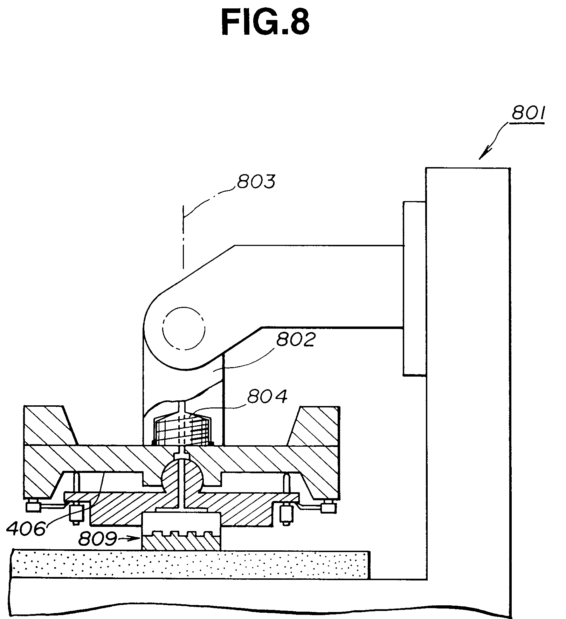

In Figures 4 and 6, the inclining means is provided in three parts. However, the number of separate inclining means is not limited as long as the holding surface can be inclined to desired direction and to desired angle with respect to the reference surface. However, three or four inclining means are preferably used so as to regulate the angle accurately and quickly. In this case, the inclining means are preferably provided at the edges of a triangle or rectangle which overlaps with the holder. Preferably the inclining means are provided at the places which the triangle or the rectangle overlaps with 10% or more, preferably 50% or more, of the holder's area.
Another embodiment of a process for producing a stamper according to the present invention will now be explained with reference to Figures 7 and 8.

Referring to Figure 7, 701 is an apparatus having the same structure as the apparatus in Figure 4 except that a screw 702 is provided as means for fixing the apparatus of Figure 4 to the apparatus for abrading a stamper shown in Figure 8. Thus corresponding components to those of Figure 4 are correspondingly labelled. In the apparatus of Figure 7, however, there is provided an indicating means 708 which indicates the amount of movement that the inclining means 407 has undergone.

Referring to Figure 8, 801 represents an abrading apparatus, and 802 is an arm to which the apparatus 701 may be attached so as to be at right angles to the centre axis 803 of the arm and the reference surface 406.

In use of the apparatus of Figures 7 and 8, first of all, the holding surface 410 is paralleled with the reference surface 406 using the inclining means 407, and the indicating means 708 are initialized.

Next, a master 809 is set on the holding surface 401, the patterned surface of the master 809 is paralleled with the reference surface using the inclining means 407, and the inclination of the holding surface to the reference surface is recorded.

The master 809 is then detached from the apparatus 701, 801, and a electroconductive layer and electroformed layer are formed on the patterned surface of the master as previously described. In a slightly alternative process the electroconductive layer may be formed before the paralleling step of the patterned surface and the reference surface as described above. The master having the electroformed layer is then set on the holding surface 410 of the apparatus 701 again so as to expose the back surface of the electroformed layer.

If the master has bent due to internal stresses in the electroformed layer, the bend may preferably be corrected by use of the vacuum chuck 409 as described in relation to Figure 4.

Next, the patterned surface is paralleled with the reference surface using the previously recorded information from the indicating means 708.

The inclination of the master is then fixed with a clamping means (not shown) and the apparatus 701 is attached to the arm 802 shown in Figure 8 so as to enable the abrading of the back surface of the electroformed layer.

In the example described above, the back surface of the master can always be abraded so as to be parallel with the reference surface. Thus it is not necessary to measure the thickness of the electroformed layer in the abrading step. This enables the production of a good quality stamper at low cost.

The abrading apparatus 801 is preferably provided with a vacuum chuck for holding the master to the holding surface during the abrading process. Thus, the abrading apparatus 801 may be provided with a pipe 802 running through the arm which is connected to a vacuum pump (not shown in Figure 8) with a screw box 804 connecting the pipe 801 to the groove 409-1 in the holder.

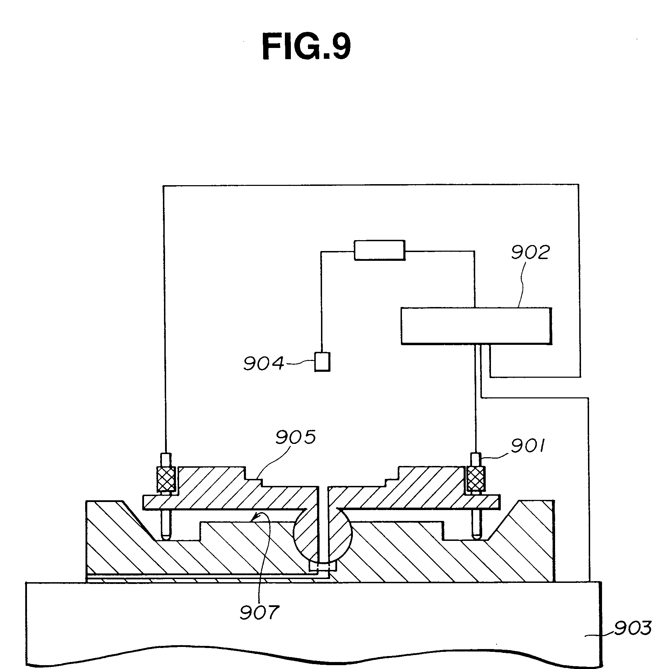

The process for defining a reference surface during the abrading of a stamper in accordance with the present invention can be operated automatically by, for example, using the apparatus shown in Figure 9.

Referring to Figure 9, this apparatus is again of similar form to that shown in Figure 4. Each inclining means 901 however is connected to a controller 902, the inclining means being operable by signals from the controller 902.

An X-Y stage 903 is also connected to the controller 902, the X-Y stage 903 being operable according to signals from the controller. Measurements are made of the distance between the laser head 904 and desired points on the patterned surface of the master (not shown in Figure 9) set on the holding surface 410 to send the data to the controller 902. The controller 902 then operates the inclining means 901 such that each distance between the laser head 904 and the measured points on the patterned surface of the master are the same.

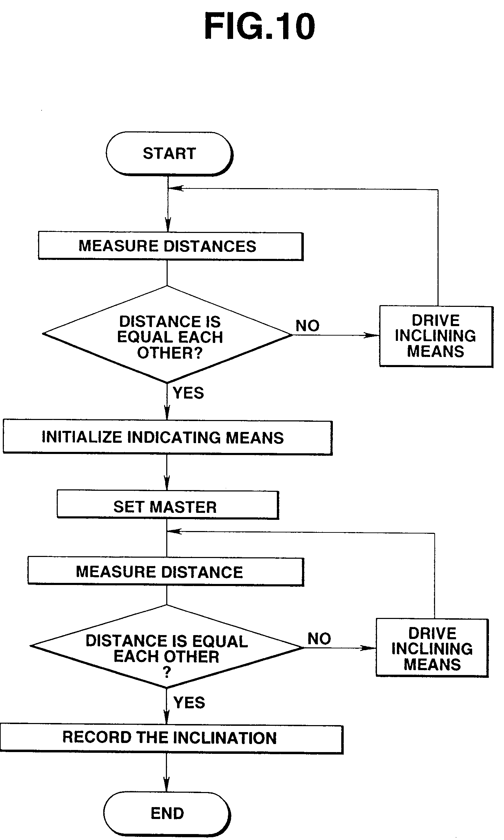

The operation of the apparatus of Figure 9 will now be explained with reference to Figure 10.

First of all, during an initializing step, the X-Y stage 903 and the laser head 904 are used before setting the master on the holding surface 905 to measure the distances between the laser head and a number of points on the holding surface. The distances are compared each other, and if the distances are different, the controller 902 operates the inclining means 901 to equalise the distances. When the holding surface 905 is paralleled with the reference surface 907, the indicating means is initialized.

Next, the master is set on the holding surface 905, and X-Y stage 903 is moved and the laser head 904 is operated so as to measure the distances between the laser head and a number of points on the patterned surface of the master, the distances being compared each other. If the distances are different to each other, the controller 902 operates the inclining means 901 to equalise the distances.

The patterned surface of the master is then paralleled with the reference surface 907, the movement of the inclining means 901 being detected by indicating means (not shown) and recorded.

The stamper is further processed in the same manner as in the processes described above.

In this particular example, an indicating means which detects the amount of movement of the inclining means 901 is used. However, an indicating means which detects the inclination of the holding surface 905 to the reference surface 907 as used in the apparatus of Figure 4, may be used. In this case, the step for initializing the indicating means may be omitted in the flow chart of Figure 10.

By use of an apparatus in accordance with the present invention, a good quality stamper can be produced from a master in which the surface accuracy of the patterned surface is not good. Hitherto, where a stamper is produced a master whose patterned surface is concave, a stamper having a convex surface is produced. Thus, such a master cannot be used for producing a stamper requiring high precision, such as a stamper for an optical recording medium.

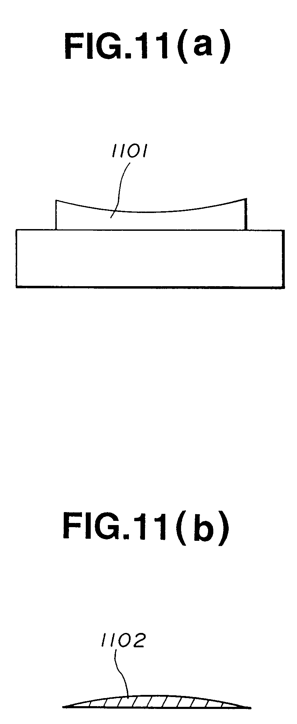

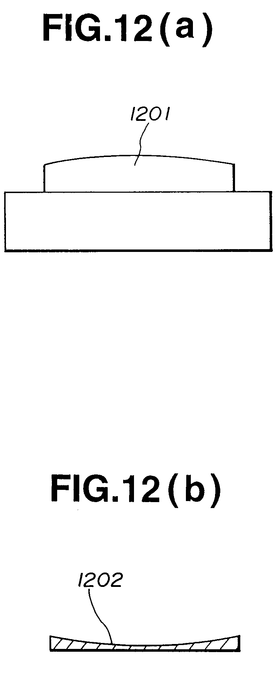

However, by use of an apparatus as described herebefore in which a reference surface is used when abrading the stamper, a stamper having good quality can be produced even from a master whose surface accuracy is not good as will now be described with reference to Figures 11 and 12. As can be seen from Figure 11, the master 1101 has a concave surface, whilst in Figure 12 the master 1201 has a convex surface.

First of all, a holding surface for holding the master is paralleled with the reference surface by use of the inclining means as, for example, in the apparatus of Figure 4.

Next, the master is set on the holding surface, and the surface accuracy of the master is measured with suitable means, for example, an optical head as described in relation to Figure 5. A spacer 1102 or 1202 for correcting the surface accuracy of the master 1101 or 1201 is then made based on the measurement.

The master 1101 or 1201 is set on the holding surface with the spacer 1102 or 1202 lying between the spacer and the master, the spacer thus correcting the master's surface accuracy. The patterned surface whose surface accuracy has been corrected is paralleled with the reference surface using the inclining means, and the information about the inclination of the holding surface to the reference surface is recorded.

Next, the master is removed from the holding surface, and an electroconductive layer and an electroformed layer are formed on the patterned surface of the master as before.

The master is then brought into contact with the holding surface with the spacer lying between the holding surface and the master, the patterned surface is paralleled with the reference surface, and the inclination is fixed.

The apparatus is attached to the arm of the abrading apparatus shown in Figure 8 to abrade the back surface of the electroformed layer.

A stamper obtained by the above process has uniform thickness and fine surface accuracy even if the master does not have good surface accuracy, as the surface accuracy of the patterned surface of the master is corrected by the spacer. The back surface of the electroformed layer is abraded based on the patterned surface of the master, and thus such a stamper can be used for optical recording media.

Thus a master which does not have good surface accuracy which it is difficult to use, can be used. Consequently the cost of producing the stamper and subsequent cost of producing the optical recording medium can be reduced.

There is also provided in accordance with the present invention, a process for producing a female stamper from a male master stamper using a process in which photocurable resin is used rather than an electroforming process. Using such a process, the master can be produced with good mass productivity and low cost.

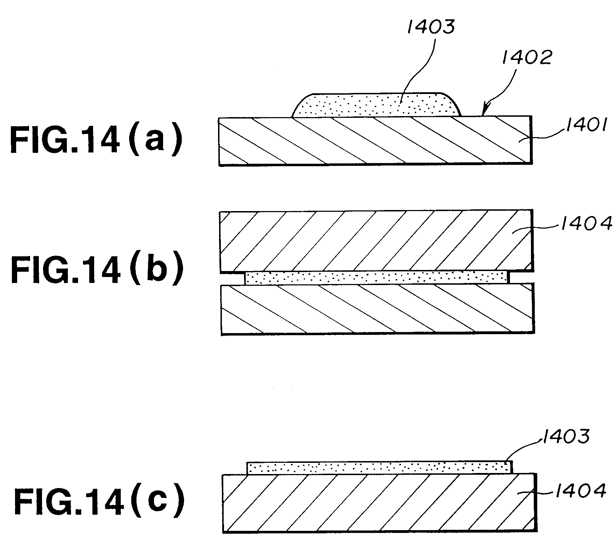

Turning now to Figure 14, a female stamper can be obtained by the following process which comprises the steps of:
providing photocurable resin on the patterned surface 1402 of the male master stamper 1401 (Figure 14(a));
pressing the photocurable resin between a transparent substrate 1404 and the male stamper 1401 to form a photocurable resin layer having uniform thickness (Figure 14(b));
irradiating the photocurable resin layer 1403 to cure the photocurable resin layer and to adhere the photocurable resin layer to the transparent substrate 1404; and
peeling the cured photocurable resin layer 1403, which has now adhered to the transparent substrate 1404, from the male stamper 1402 to obtain a female stamper (Figure 14(c)).

As photocurable resin tends to shrink when it is cured, previously it has been difficult to produce a stamper having uniform thickness and fine surface accuracy suitable for use as a stamper for an optical information recording medium.

However, by use of the present invention, a stamper can be produced from a master which does not have uniform thickness and fine surface accuracy. Thus the female stamper produced by the process illustrated in Figure 14 can be used as a master for an optical recording medium.

A spacer may be used to correct for the surface accuracy of the master as described in relation to Figures 11 and 12. The shape of the spacer may be of any suitable shape to correct the surface accuracy of the master's patterned surface. For example, a spacer may be made of metal and provided with a groove which connects the groove 409-1 on the holding surface shown in Figure 4. Alternatively a spacer may be provided which can allow the master to be sucked onto the holding surface by the vacuum pump 409-2 without being provided with the groove 409-1. Examples of suitable materials for such a spacer are porous ceramics, rigid urethane resin etc.

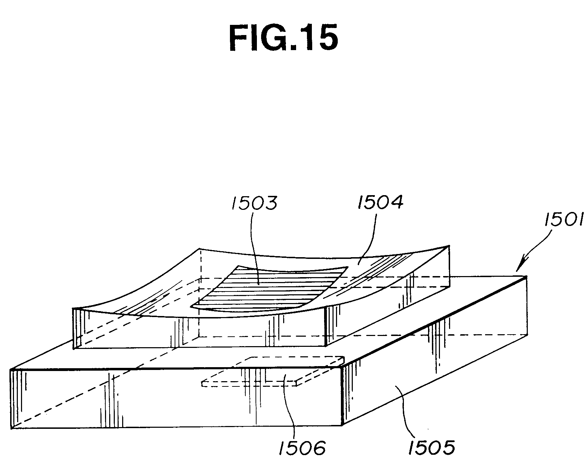

Turning now also to Figure 15, this figure illustrates a master 1501 formed by the process described in relation to Figure 14. As can be seen, the particular master includes a concave patterned surface 1503 formed on the photocured resin layer 504 which is in turn formed on a substrate 505. During the abrading process a spacer 1506 is placed between the master 1501 and the holder shown in Figure 4, at the centre part of the master. If the master had a convex patterned surface rather than the concave surfaces shown in Figure 15, the spacer would be put between the master and the holder at the peripheral part of the master. By the peripheral part of the master is meant the circle whose centre is a cross point of two diagonal lines of the master.

As described above, by use of an apparatus or process according to the present invention,
(1) even if a master does not have a uniform thickness, a stamper having good quality can be produced;
(2) even if a master does not have good surface accuracy, a stamper having good quality can be produced;
(3) a stamper having uniform thickness may be obtained, thereby enabling substrates with preformat patterns to be used for an optical recording medium, the substrates having high accuracy and less birefringence than has previously been possible.

A number of embodiments of the present invention will now be explained in more detail with reference to the following examples.

### EXAMPLE 1

Using the apparatus as shown in Figure 7, a stamper for an optical recording medium was prepared. The apparatus was set so that the reference surface was paralleled with a level surface. Referring to the apparatus 701, the spherical axis had 35 mm of radius, and the holder 402 had 360 mm - width and 400 mm - length and was made of stainless steel. The apparatus 701 was provided with three inclining means and three indicating means.

As an inclining means 407, a micrometer (trade name: Micrometer 2-13; manufactured by Mitsutoyo K.K.) was used and as an indicating means 407, Test-Indicator T-1 (manufactured by Mitsutoyo K.K.) was used.

In addition every inclining means was provided at the edge of the holder so as to be on 250 mm - radius of a circle whose centre is at the holder's centre of gravity.

A master was provided according to a process using a photocurable resin as described below.

First of all, a photomask having a pattern having a 12 µm pitch, a 3 µm width and a 3000 Å height in a stripelike pattern suitable for use on an optical card was provided. The pattern was made of chromium and which was provided on a transparent glass substrate.

Acrylate type photocurable resin (manufactured by Nikon Kayaku K.K.) was then dropped on the patterned surface of the photomask, after which 300 mm - width, 300 mm - length and 10 mm - thickness of glass substrate was overlapped on the photomask through the photocurable layer to bring the 100 µm of thickness. Ultraviolet radiation was then used to cure the photocurable resin layer, after the which the photomask was peeled to obtain the master in which the resin layer having a preformat pattern on the surface of the resin layer was provided on the transparent substrate.

Next, a 1000 Å - thickness Ni electroconductive layer was formed on the patterned surface by sputtering. The master was then set on the holding surface of the holder 402, and was set in place using the vacuum chuck. The inclination of the master's patterned surface to the reference surface was then adjusted using the apparatus comprising X-Y stage, laser head and controller shown in Figure 5. The controller was programmed to measure distances between the laser head at 49 points on the surface of the electroconductive layer.

As a result, the resin layer had 80 µm thickness at the right hand edge, and 100 µm thickness at the left hand edge. Thus the surface of the electroconductive layer had 20 µm of inclination to the reference surface. The surface of the electroconductive layer was then paralleled with the reference surface using the micrometers, after which the inclination of the holding space to the reference surface indicated by the test indicators was recorded.

The master was then detached from the holder, after which the master was attached to a holder of the electroforming apparatus shown in Figure 13. Electroforming was performed using the liquid whose composition is shown below by applying a current having a time integrated value of 160 - 240 Ampere Hours between the Ni layer and the electroconductive layer, while rotating the master at 20 -30 rpm. This produced a 220 - 300 µm thickness Ni layer on the electroconductive layer.

The composition of the liquid for the electroforming was:
nickel sulfamate (Ni(NH₂SO₃)₂ - 4H₂O) = 500 g/l
borasic acid (H₃BO₃) = 35-38 g/l
pit prevention agent = 2.5 ml/l

The apparatus of Figure 7 was then attached to the arm of the abrading apparatus shown in Figure 8, and the master having the electroformed Ni layer was set on the holding surface of the holder, and fixed in place using the vacuum chuck. The patterned surface of the master was paralleled with the reference surface using the previously recorded orientation data.

As a result, the holding surface had an inclination with respect to the reference surface.

Next, this inclination was fixed by a clamping means.

Next, an abrading cloth (trade name: Suede 7355-000 F42S; manufactured by Daiichi Race K.K.) was attached on the plate of the abrading apparatus, the back surface of the electroformed layer then being abraded using the cloth and a liquid for abrasion (trade name: Polipla 700).

The thickness of the electroformed layer was then measured as follows: first of all, the apparatus 701 was detached from the arm of the abrading apparatus, and the apparatus 701 was set on the X-Y stage 502 in Figure 5, after which the master was brought into contact with the holding surface using a vacuum pump (not shown in Figure 5). The distances between the laser head 501 and the 49 points on the back surface of the electroformed layer were then measured. The abrading step was completed when the thickness of the electroformed layer was 200 µm, with the unevenness being within ± 2 µm.

Both the electroformed layer and the electroconductive layer were separated from the master to obtain a stamper for the optical recording medium, after which this stamper was fastened on a mirror-finished roll substrate of 300 mm in diameter, made of chromium-plated steel to form the roll stamper 303 in Figure 3. As the roll 304 and 305, mirror-finished roll of 300 mm in diameter, made of chromium-plated steel was used.

A polycarbonate resin (trade name: L-1250; manufactured by Teijin Chemicals Co., Ltd) was extruded from the extruder 301 to form a molten resin sheet, after which the molten resin sheet was pressed between the roll 304 and the roll stamper so that the preformat pattern was transferred to the surface of the polycarbonate resin sheet.

On the substrate sheet for optical recording medium thus prepared, birefringence was very small and the preformat pattern was confirmed to have been transferred in a good state.

### EXAMPLE 2

A master was provided in the same manner as in Example 1. However, the master's patterned surface had the concavity shown in Figure 12(a), the concavity being 10 µm deep. Both edges of the resin layer 121 were 100 µm thick.

A spacer made of hard urethane rubber for compensating the concavity shown in Figure 12(b) was provided, after which the master was set through the spacer on the holding surface of the apparatus shown in Figure 7.

An electroconductive layer and an electroformed layer were then formed in the same manner as in Example 1, and the electroformed layer was abraded in the same manner as in Example 1. Both the electroformed layer and the electroconductive layer were then separated from the master to obtain a stamper for optical recording media.

The thickness of the stamper at the 49 places where the distance between the laser head had been measured were measured using a micrometer (manufactured for example by Mitsutoyo), to give a measured thickness of 200 µm ± 3 µm.

## Claims

1. An apparatus for producing a stamper having a stamping pattern on a surface of the stamper, comprising:
a reference surface;
a holder having a holding surface for holding a master including the stamping pattern;
means for inclining the holder relative to the reference surface; and
means for indicating the inclination of the holder with respect to the reference surface.

2. An apparatus according to claim 1, the apparatus comprises a means for detecting the inclination of the surface of a master carried by the holder with respect to the reference surface.

3. An apparatus according to claim 2, which comprises a means for driving the inclining means based on the detected inclination.

4. An apparatus according to any one of the preceding claims, wherein the indicating means is arranged to indicate the amount by which the inclining means has moved.

5. An apparatus according to any one of the preceding claims, wherein the reference surface is a plane surface.

6. An apparatus according to any one of the preceding claims, wherein said means for inclining comprises at least three separate means for inclining positioned at different points on the means for holding.

7. An apparatus according to claim 6, which is provided with three said separate inclining means.

8. An apparatus according to claim 6, which is provided with four said separate inclining means.

9. An apparatus according to claim 7, in which the separate inclining means are provided on the perimeter of a triangle is overlapping the surface on which the master is held.

10. An apparatus according to claim 8, in which the separate inclining means are provided on the perimeter of a square overlapping the surface on which the master is held.

11. An apparatus according to any one of the preceding claims, which is provided with a means for attaching the holding means to an abrading means.

12. A process for producing a stamper having a stamping pattern on at least one surface, comprising the steps of:
setting a master incorporating the stamping pattern on a holding surface;
paralleling the master's patterned surface with a reference surface and recording the inclination of the holding surface to the reference surface;
electroforming on the master's patterned surface to form a electroformed layer;
setting the master having the electroformed layer on the holding surface;
paralleling the patterned surface of the master with the standard surface according to the recorded inclination;
abrading the surface of the electroformed layer remote from the surface of the electroformed layer which is in contact with the master so as to be parallel with the patterned surface of the master; and
peeling the electroformed layer from the master to obtain the stamper.

13. A process according to claim 12, wherein the abrading step comprises the steps of:
fixing the orientation of the patterned surface of the master such that it is parallel with the reference surface;
attaching the apparatus to an abrading apparatus; and
abrading the back surface of the electroformed layer.

14. A process for producing a stamper having a stamping pattern on its surface, comprising the steps of:
providing a master having a surface pattern corresponding to the stamping pattern;
electroforming the patterned surface of the master to form an electroformed layer;
abrading the surface of the electroformed layer remote from the master using the patterned surface of the master as a reference orientation; and
peeling the electroformed layer from the master to obtain the stamper.

15. A process according to claim 13, including the step of providing a spacer between the holding surface and the master effective to correct the surface accuracy of the patterned surface of the master.

16. A process according to any one of claims 13 to 15, wherein the pattern is formed on the master in a cured photocurable resin layer.
